Europäisches Patentamt

European Patent Office

Office européen des brevets

(11) Publication number: **0 218 787**
**B1**

(12) **EUROPEAN PATENT SPECIFICATION**

(45) Date of publication of patent specification: **14.03.90**

(21) Application number: **86107749.3**

(22) Date of filing: **06.06.86**

(51) Int. Cl.⁵: **F 16 K 1/22**

(54) **Quarter turn valve.**

(30) Priority: **24.06.85 US 747980**

(43) Date of publication of application:
**22.04.87 Bulletin 87/17**

(45) Publication of the grant of the patent:
**14.03.90 Bulletin 90/11**

(84) Designated Contracting States:
**DE GB**

(56) References cited:
**US-A- 965 322**
**US-A-3 677 297**

(73) Proprietor: **White Consolidated Industries, Inc.**
**11770 Berea Road**
**Cleveland Ohio 44111 (US)**

(72) Inventor: **Herr, Leroy E.**
**1203 Mission Drive**
**Erie, Pa. 16509 (US)**
Inventor: **Shea, Allan K.**
**1509 High Street**
**Erie, Pa. 16509 (US)**
Inventor: **Kunkle, Timothy E.**
**8648 Maplecrest Drive**
**McKean, PA 16426 (US)**

(74) Representative: **Türk, Gille, Hrabal**
**Bruckner Strasse 20**
**D-4000 Düsseldorf 13 (DE)**

Courier Press, Leamington Spa, England.

# EP 0 218 787 B1

**Description**

Background and Summary of the Invention

The present invention is directed to a butterfly valve as indicated in the preamble portion of claim 1 and, more particularly, to a new and improved high pressure, high performance butterfly control valve.

Typically, a butterfly valve comprises a vane in the form of a disc with a part spherical periphery. The disc is rotatably mounted within the fluid path of a valve housing, whereby the vane periphery may be rotated to engage the internal surfaces of the housing to thus the valve. In order to open the valve, the vane is rotated by a shaft about an axis such that the periphery thereof is displaced from the housing surfaces to permit fluid flow around the periphery. The initial fluid flow during the beginning of rotation of the vane is in the form of two new-moon-shaped flows, one around the downstream-roated periphery of the vane and the other around the upstream-rotated periphery of the vane.

A characteristic of each new-moon-shaped fluid flow is that a small angular change in the vane position due to rotation results in a relatively large change in flow area. Accordingly, it is rather difficult to accurately control the characteristics of fluid flow particularly during the low angle region of vane rotation. While the lack of fluid control is not significant for many low pressure butterfly valve applications, it is critical in any high pressure and/or high performance fluid control utilization. For this reason, conventional butterfly valve designs have generally not been considered for use in high pressure and critical, high performance environments.

An example of one prior art proposal, which forms the closest state of the art, to improve fluid flow control during low angle rotation of a butterfly valve vane is found in U.S. Patent No. 3,677,297. Pursuant to the disclosure of the '297 patent, a pair of recesses is formed in the vane to define two symmetrical, diametrically opposed semi-circular projections, one extending in the upstream rotation direction and the other extending in the downstream rotation direction. A plurality of fluid control flow passages is provided in each of the projections with each control passage extending from the outer periphery of the vane to the complementary recess. In the operation of the valve, the vane is rotated as in a conventional butterfly valve design. However, prior to the displacement of the vane periphery from the housing surfaces, the fluid control flow passages of the projections are exposed to fluid flow. Accordingly, all of the initial fluid flow through the butterfly valve during a first predetermined number of degrees of rotation of the vane is entirely through some or all of the plurality of fluid control flow passages. After rotation through the first predetermined number of degrees, the outer edges of the projections formed at the periphery will clear the valve housing surfaces and further fluid flow characteristics will be as in wide angle operation of a conventional butterfly design.

It is a primary objective of the present invention to provide a new and improved high performance butterfly valve suitable for use in critical, high performance and/or high pressure applications.

This primary object is solved by the features of the main claim. The subclaims show further positive developments of the invention.

Generally, the invention comprises a novel vane configuration including a downstream offset shaft and asymmetrical upstream and downstream projections to maximize full open valve fluid flow with excellent fluid control during low angle operation. The offset shaft facilitates a highly efficient leak tight seal between the vane periphery and the internal walls of the valve body. When the shaft is downstream from the vane, the torque developed by the shaft increases at a uniform rate during valve opening to provide a more stable valve control. Moreover, the offset orientation of the shaft co-operates with the downstream extending projection to provide a minimal obstruction to fluid flow when the vane is in the full open position, as will appear.

In accordance with an important feature of the invention, the vane is formed to include two, diametrically opposed, generally semi-circular projections, one extending in the upstream direction and the other extending in the downstream direction of fluid flow. The two projections are asymmetrical with respect to one another and are each provided with a plurality of fluid flow passages. The fluid flow passages are each arranged to extend from the outer periphery of the vane to the inner diameter of the complementary projection. In this manner, the initial fluid flow through the valve during a first predetermined number of degrees of rotation of the vane will be solely through the passages. Such an arrangement facilitates maximum fluid flow control during low angle operation with significantly reduced valve noise and cavitation.

Pursuant to a critical teaching of the invention, the asymmetrical projections are arranged whereby the upstream extending projection is formed to a streamline configuration with a smooth, generally flat upstream most surface (when the vane is in the fully closed position) and the downstream extending projection is greater in length of extension relative of the upstream extending projection. During operation of the valve, the vane is rotated such that the upstream extending projection is rotated in the downstream direction and vice versa. Accordingly, as the vane periphery is rotated relative to the inner valve body wall, the fluid passages of the downstream extending projection will be exposed to fluid flow prior to the displacement of the vane periphery from the wall, with fluid flow being from the vane periphery opening of each passage to the projection inner diameter opening of each passage. Conversely, prior to the displacement of the vane periphery from the wall, the fluid passages of the upstream extending projection will be exposed to fluid flow with fluid flow being from the inner diameter opening of each flow passage to

2

the peripheral opening of each passage.

Due to the greater relative length of extension of the downstream extending projection, a greater number of fluid flow passages may be formed therethrough. For example, two circumferentially spaced rows of passages may be formed at the part spherical periphery of the upstream rotated, part-spherical portion of the vane. Accordingly, all fluid flow may be channeled through the passages of the downstream extending projection for a sufficient total predetermined range of angular rotation of the vane to provide significant low angle fluid flow control. At the opposite end of valve operation, i.e., when the vane is in the full open position, the downstream extending projection is recessed somewhat below the downstream offset shaft to provide a minimal streamline obstruction to fluid flow, thereby maximizing the full open rate of fluid flow.

On the opposite side of the vane, the upstream extending projection is rotated in the downstream direction and fluid flow through the passages of the upstream extending projection, prior to displacement of the vane periphery from the valve housing wall, results in fluid egress from the peripheral openings of the passages. As will appear in the following detailed description of a preferred embodiment of the invention, the vane peripery and the peripheral openings of the upstream extending projection are arranged to be in close proximity to the inner surfaces of the valve housing wall during low angle rotation of the vane. It has been discovered that a close proximity between the vane periphery and the valve housing wall surfaces, together with the peripheral egress of fluid inherently contributes to the control of low angle fluid flow through the downstream rotated portion of the vane. Consequently, the upstream extending projection is formed to a streamline configuration with a length of extension significantly less than the length of extension of the downstream extending projection, as discussed above. The downstream rotated periphery of the vane will be displaced from the valve housing wall well before the displacement of the upstream rotated periphery due to the streamline configuration of the complementary projection.

Thus, after the aforementioned first predetermined number of degrees of rotation, only the flow through the upstream rotated periphery will be solely through flow passages for a second predetermined number of degrees of rotation (i.e., until the upstream periphery is displaced from the valve housing wall). Nevertheless, the discovered contribution of flow control by the valve housing wall and close periphery results in significant low angle fluid flow control around the downstream rotated portion of the vane without the need of the relatively longer length of extension of the downstream extending projection or the extra fluid passages formed therethrough. The discovery is effectively utilized in the streamline configuration and flat surface of the upstream extending projection whereby, at the full open vane position, the streamline projection provides a minimal obstruction to fluid flow.

Accordingly, the novel vane structure taught by the present invention provides a significantly improved butterfly valve operation suitable for high pressure and high performance applications. The downstream offset shaft and asymmetrical projections afford reliable low angle fluid control while providing a vane configuration which is a minimal obstruction to fluid flow when in the full open position. The streamline, upstream extending projection utilizes fluid control passages to control fluid flow during the first predetermined number of degrees of vane rotation and, thereafter, additionally utilizes the flow control effects of the valve housing wall, close vane periphery and peripheral fluid egress to maintain adequate flow control during the second predetermined number of degrees of vane roation. On the opposite side of the vane, the relatively longer length of extension and extra flow passages of the downstream extending projection provide adequate flow control during the entire first and second predetermined number of degrees of vane rotation. The overall configuration of the vane, including the streamline projection and advantageous offset geometry between the shaft and downstream extending projection, presents a generally streamline full open vane to fluid flow to maximize the total fluid flow capacity of the valve and minimize undesirable effects such as turbulence around the vane.

For a better understanding of the above, and other features and advantages of the invention, reference should be made to the following detailed description of a preferred embodiment of the invention and to the accompanying drawings.

Brief Description of the Drawings

Fig. 1 is a front plan view of a high performance butterfly control valve built in accordance with the invention.

Fig. 2 is a side cross-sectional view of the valve of Fig. 1 taken generally along line 2—2 and illustrating the vane in the closed position.

Fig. 3 is an additional side cross-sectional view of the valve as shown in Fig. 2 and illustrating the vane after rotation through a first predetermined number of degrees.

Fig. 4 is a bottom view, partially in cross-section, of the valve of Fig. 1, taken generally along line 4—4.

Fig. 5 is an exploded detail view of the vane seal element illustrated in Fig. 2.

Fig. 6 is a further side cross-sectional view of the valve as shown in Fig. 2 and illustrating the vane after rotation through 90° (full open valve position).

Detailed Description of a Preferred Embodiment

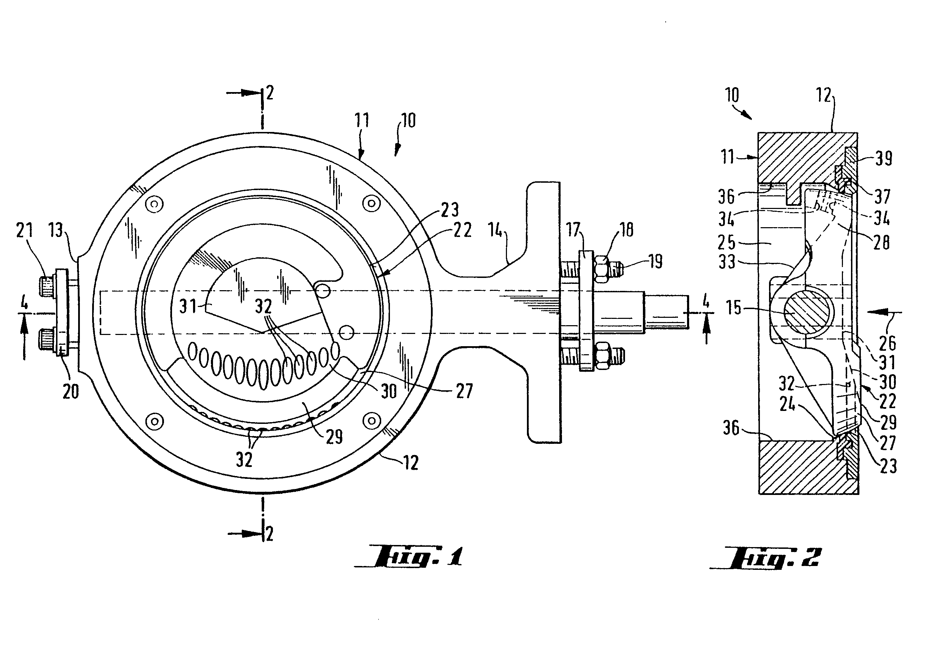

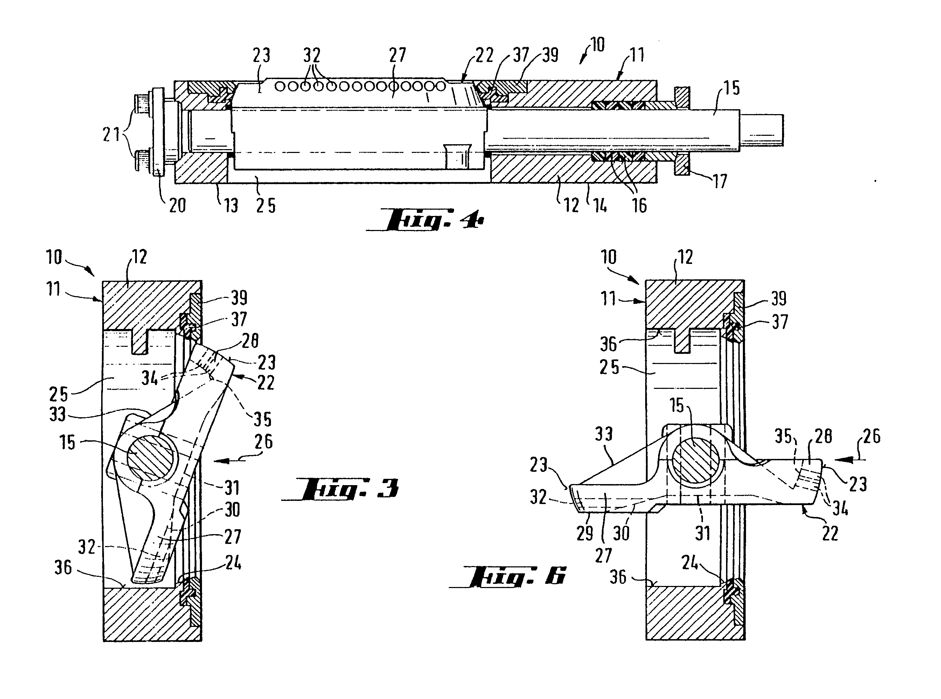

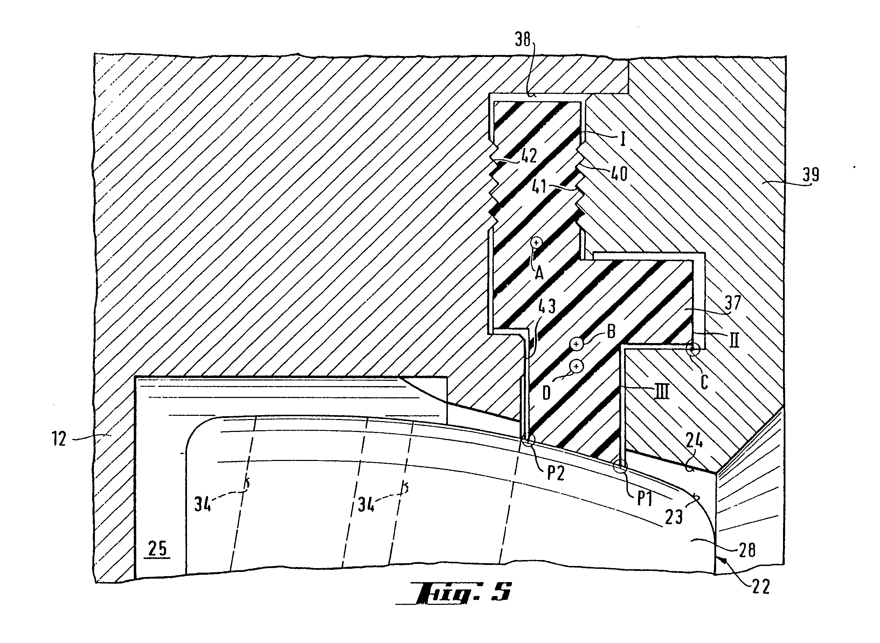

Referring to the drawings, and initially to Fig. 1, a butterfly valve is generally designed by the reference numeral 10. The valve includes a valve housing 11 which comprises a cylindrical valve body 12 and shaft support structures 13, 14 integral therewith to rotatably support a shaft 15. As illustrated in Fig. 4, the shaft 15 is supported at either end by the structures 13, 14 and is arranged to extend completely through the internal flow area 25 of the valve body 12. Moreover, the right end of the shaft 15 extends beyond the structure 14 for connection to an actuator whereby the shaft may be selectively controlled to rotate through a work stroke in either the clockwise or counterclockwise rotational directions, as is well known in the art (not specifically illustrated).

To advantage, a series of sealing rings 16 is mounted between the internal surfaces of the structure 14 and shaft 15 to prevent fluid leakage. The sealing rings 16 are secured and compressed within the structure 14 by an end cap 17 which is bolted to the structure 14 by a nut 18 and bolt 19 arrangement. An additional end cap member 20 is bolted to the open end of the shaft support structure 13 by suitable bolts 21 to close and seal off the valve housing 11.

In accordance with the invention, a novel circular vane structure 22 including a part spherical outer periphery 23 is fixedly secured upon the shaft 15 for rotation within the valve body 12. As illustrated in Fig. 2, the shaft 15 supports the vane 22 whereby the entire outer periphery 23 of the vane 22 is in a sealed relation with a portion of the inner cylindrical surface 24 of the valve body 12. In this position, the vane 22 completely obstructs the flow area 25 of the valve body 12 to close the valve 10. Pursuant to conventional butterfly valve operation, the actuator (not specifically illustrated) operates to rotate the shaft 15 whereby the periphery 23 of the vane 22 is displaced from the inner surface 24. The shaft 15 may rotate the vane up to a quarter turn or 90° of rotation.

At 90° of rotation, the diameter of the vane 22 perpendicular to the shaft 15 will extend generally parallel with the direction 26 of fluid flow (see Fig. 6). In this position, the valve 10 is in the full open position. However, it should be understood that although the valve 10 is now in the full open position, the vane 22 is still within the flow area 25 of the valve body 12 and, therefore, presents an obstruction to fluid flow. Such a vane obstruction is an inherent problem with respect to butterfly valve design and it is a principal teaching of the present invention to provide a vane configuration which minimizes the flow obstruction effects of the vane while accomplishing low angle rotation flow control, as will appear.

Pursuant to the invention, the vane 22 is mounted upon the shaft 15 whereby the shaft 15 is offset in the downstream direction from the peripheral portions 23 of the vane 22 (as seen in Fig. 2). Moreover, the vane 22 is formed to include asymmetrical upstream and downstream extending semi-circular projections 27, 28 each extending over diametrically opposed, approximately 180° portions of the vane 22. The upstream extending projection 27 is generally streamline in configuration including a flat, smooth upstream, most top surface 29 (as seen in Fig. 2) that gradually tapers down 30 to the upstream face 31 of the vane 22. As indicated by Figs. 3 and 6, the upstream extending projection 27 is rotated in the downstream direction through 90° to the full open vane position, whereby the face 31, tapered surface 30 and flat smooth surface 29 of the projection 27 provide a smooth, streamline and turbulence free obstruction to fluid flow.

In accordance with the low angle rotation flow control features of the invention, as will be described in greater detail below, the upstream extending projection is provided with a series of fluid flow passages 32. Each of the flow passages 32 is arranged to extend generally parallel to the direction of fluid flow (as illustrated in Fig. 6) and includes an opening on the tapered surface 30 of the upstream extending projection 27 and a peripheral opening on the part spherical vane periphery 23. Of course, at full open position, (Fig. 65) the then parallel to flow passages 32 act to reduce the obstructing volume of the vane 22 and further minimize the obstruction effect of the vane 22 by accommodating fluid flow from the upstream oriented tapered surface opening of each passage 32 to the downstream oriented peripheral opening of each passage 32.

On the downstram face 33 of the vane 22 (see Fig. 2), the downstream extending projection 28 is formed to a length of extension that is relatively greater than the length of extension of the upstream extending projection 27 whereby two circumferentially spaced rows of flow passages 34 are formed for low angle flow control. Each of the flow passages 34 includes an opening on the part spherical periphery 23 of the vane 22 and an opening on the opposite surface 35 of the projection 28. Referring once again to Fig. 6, when the vane is in the full open position, the projection 28 will have been rotated in the upstream direction whereby the fluid flow around the face 33 of the vane 22 will first encounter the peripheral end of the projection 28. The two rows of flow passages 34 will act to reduce the obstructing volume of the projection 28 by accommodating fluid flow therethrough. In addition, according to a specific feature of the invention, the flow passages 34 are arranged to extend at a slight, upward angle relative to the direction of fluid flow 26 whereby the flow through the passages at full open position is guided upwardly to minimize turbulence around the offset shaft 15. The face 33 of the vane 22 is also tapered from either side of the shaft 15 to provide a more streamline, turbulence free flow around the shaft 15. Pursuant to a further feature of the invention, the projection 28 is offset below the shaft 15 when the vane 22 is in the full open position (see Fig. 6) as an additional means to minimize turbulence and facilitate smooth fluid flow across the face 33 of the vane 22 when in the full open position.

Thus, according to the vane configuration teaching of the invention, the full open obstruction and turbulence effects of the vane 22 are reduced to the lowest practicable limit while providing peripheral flow passages 32, 34 for significant low angle rotation fluid control. Referring now to Fig. 3, as the shaft 15 is operated to rotate the vane 22 in the clockwise opening direction, the periphery 23 is moved relative to the portion 24 of the valve body 12. Prior to displacement of the periphery 23 from a sealed relation with the portion 24, the flow passages 32, 34 of the projections 27, 28 will be gradually exposed to fluid flow. In the preferred embodiment of the invention, the vane 22 is rotated approximately 5—6° before any of the flow passages 32, 34 are exposed to fluid flow. At approximately 5—6° of rotation, all of the passages 32 and the first row of passages 34 will begin to be exposed to fluid flow approximately simultaneously. The entire fluid flow will be through the passages 32 and first flow of passages 34 from approximately 5—6° of rotation, until approximately 11° of rotation. Moreover, the volume of fluid flow will gradually and controllably increase as the passages 32 and first row of passages 34 are gradually exposed to full fluid flow due to rotation of the vane 22. At approximately 11° of rotation, the periphery 23 about the projection 27 will just clear the portion 24 of the valve body 12 and the second row of passages 34 will begin to be exposed to fluid flow.

Thereafter, further rotation of the vane 22 will result in a further gradual and controlled increase in fluid flow due to the existing flow through the fully exposed passages 32 and first row of passages 34, the gradual exposure of the second row of passages 34 and the increasing flow around the displaced, downstream rotated periphery 23 about the projection 27. As discussed above, the periphery 23 adjacent the projection 27 is in close proximity (approximately .061") to the inner wall 36 of the valve housing 12. Moreover, the fluid flow through the passages 32 will exit the passages 32 at the peripheral openings thereof and flow toward the close inner wall 36. The close proximity between the wall 36 and periphery 23, together with the peripheral fluid egress from the passages 32 results in an inherent flow control whereby the inherent control about the projection 27 and the gradual fluid flow increase due to the gradual exposure of the second row of flow passages 34 to fluid flow provides further low angle flow control from approximately 11° of rotation to approximately 17° of rotation of the vane 22.

At approximately 17° of rotation, the periphery 23 about the projection 28 will clear the surface 24 and further fluid flow increase up to 90° of rotation of the vane 22 will be due to increased flow around both the upstream rotated and downstream rotated portions of the periphery 23 of the vane 22. However, at approximately 17° of rotation and beyond, there is sufficient linearity between degrees of rotation and flow increase to accommodate critical flow requirements. As illustrated in the following graph, the combined effects of the flow passages 32, 34 and inherent flow control due to the close proximity between the periphery 23 about the projection 27 and inner wall 36 and peripheral fluid egress result in a highly linear relationship between fluid flow increase and degrees of rotation. The graph includes the results of an experimental test run on a 6" class 150/300 valve prototype built in accordance with the invention and plots degrees of rotation of the vane versus Cv.

Valve Opening, deg

Cv is a standard valve industry measure of flow volume and is calculated according to the following formula:

$$Cv = Q\sqrt{\frac{g}{\Delta p}}$$

wherein:

Q = gpm (gallon per minute), (6,308·10⁻⁵ m³/sec)

$\Delta p$ = P upstream-P downstream — (pressure drop through valve housing)

g = a constant (specific gravity, 1 for water at room T).

As clearly indicated in the test results depicted in the above graph, there is a considerable degree of linearity and therefore control over flow increase due to vane rotation at both the low angle, highly critical initial fluid flow phase of valve operation and high angle operation. Thereafter, as the vane 22 is rotated toward the full open 90° orientation, the streamline projection 27 and geometric offset relation between the projection 28 and shaft 15, as well as the fluid flow through the passages 32, 34 provide a vane configuration that affords maximum full flow with minimum turbulence.

Referring once again to Fig. 2, when the vane 22 is in the closed position, it is critical that a leak tight seal be maintained between the periphery 23 and wall portion 24. To assure the integrity of the seal, an inventive annular seal element 37 is mounted circumferentially about the portion 24 of the valve wall 36 at the position where the vane periphery 23 is closest to the portion 24 to form the actual seal.

The seal element 37 is formed to a predetermined cross-section, as will be described in greater detail below, and is mounted between a recess 38 formed in the valve body 12 and an annular retaining element 39 which is secured to the valve body 12 by any well known suitable means such as threaded bolts (not shown). As clearly illustrated in the detailed drawing of Fig. 5, the retaining element 39 and recess 38 define a seal containment chamber which generally conforms to the predetermined cross-section of the seal element 37. The seal element itself may be described in terms of three integral portions I, II, III which are dimensioned relative to one another and to the chamber defined by the recess 38 and retaining element 39 to provide an effective seal against the vane periphery 23. At the same time, the predetermined cross-section of the seal element 37 will provide a leak-tight seal over a wide range of fluid pressures in a manner whereby the deleterious effects of the pressure are minimized thereby greatly increasing the work life of the seal.

Pursuant to the inventive concept embodied in the seal element 37, the fluid pressure will be retained by the seal element 37 through three clearly defined, discrete pressure range operating stages of the element 37. In the preferred embodiment, the seal element 37 comprises an EPT teflon material (without any ancillary spring members or glass filled internal membranes) with a surface 40 of the first portion I conforming to serrations 41, 42 formed in the retaining element 39 and recess 38, respectively whereby the element 37 is securely mounted within the containment chamber. The surface 40, and serrations 41, 42 also provide an effective seal against leakage to the outside of the valve body 12. The first portion I is integral with the second portion II which is arranged to extend, relative to the first and third portions, in the upstream fluid flow direction. The third portion III is integral with the lower end of the second portion II and extends downwardly into the flow area 25 for sealing contact with the periphery 23 of the vane 22. As should be understood, the lower end of the portion II is conformed to the part spherical contour of the periphery 23 to provide an effective seal between the element 37 and periphery 23 from point P1 to point P2. Moreover, the portion III extends into the flow area 25 by an amount sufficient to provide a radial squeeze on the periphery 23 to form a leak tight seal.

As described above, and as illustrated in Fig. 5, the mating surface 40, and serrations 41, 42 rigidly support the seal element 37 from point A outward to the sealing surface between points P1 and P2. Point A is also initially a pivot point about which the sealing surface (P1—P2) may pivot and freely, effectively contact the vane periphery 23. The stage one operating mode contemplates the seal orientation as depicted in Fig. 5 during a fluid pressure range of from 0 hpa (0 PSIG) to approximately 6894 hpa (100 PSIG). The only contact points for the seal element 37 are at the mating surfaces 40, 41, 42 and with the vane periphery 23 between points P1 and P2. The seal element 37 is dimensioned such that the radial squeeze on the periphery 23 is sufficient to seal fluid under the low pressure conditions.

Stress and deflection on the seal 37 in the low pressure stage one operating mode may be approximated by applying the vertical deflection and unit stress at surface of plate formulas set forth on pages 173—174 of the Handbook of Formulas for Stress and Strain by William Griffel. (New York: Frederick Ungar Publishing Co., 1966, hereby expressly incorporated by reference). The constants used for the calculations according to the formulas as applied to the stage one mode of the seal element 37 are determined from loading case 6 of Table 1 (page 175) (circular plate with concentric hole — outer edge fixed and supported, uniform load over entire actual surface).

A prototype seal element according to the invention was constructed for use in connection with the 152,4 mm (6 inch) prototype valve discussed above. The prototype seal element was made from an EPT teflon material having a tensile strength of 275760 hpa (4000 psi), a tensile modulus of elasticity equal to $10 \times 40^4$ and a tensile elongation equal to 400%. Moreover, the prototype seal element had a thickness of 3,96 mm (0.156 inches), an inner diameter (to P1—P2) equal to 143,3 mm (5.643 inches) and an outer diameter (to fixed point A) equal to 162,25 mm (6.388 inches). By applying the Griffel formulas according to Table 1 case 6 it was determined that with the above seal values and dimensions operated under a pressure of 6894 hpa (100 psi), the maximum vertical deflection of the prototype seal is 0,24 mm (.0095") and the maximum stress at the outer edge of the seal is 130227 hpa (1889 psi).

When the operating environment of the valve is changed to be within a pressure arrangement of between 6894 hpa (100 psig) and 34470 hpa (500 psig), the fluid pressure will push the seal element 37 into contact with the support surface 43 at point B. Accordingly, the seal element 37 will no longer be unsupported from point A to points P1—P2, but will have some support from the support surface 43 applied at point B. The support introduced at point B will tend to inhibit increasing stresses at point A due to the higher fluid pressure environment. When the seal element 37 is in contact with the support surface 43 (i.e., a pressure range of from 6894 hpa (100 psig) to 34470 hpa (500 psig)), it will be in the stage two operating mode contemplated by the inventive concept.

A reasonable approximation of the true working stresses on the seal element 37 during second mode operation may be found by taking an average of the calculated stresses from each of case 6 and case 13 (both edges fixed, balanced loading (piston)) of Table 1. Such an approximation considers point B to be part way between rigidly fixed and freely supported. The case 6 and case 13 calculations for the prototype seal (all valves and dimensions for the seal being the same as in the stage one with exception of the outer diameter which is now considered to be 6 inches (to point B) and formula constants according to case 6 and case 13 of Table 1)) operated at 34470 hpa (500 psig) indicate a case 6 maximum deflection of 0,28 mm (0.0116 inches) and a maximum stress at the outer edge of 64941 hpa (942 psi) and a case 13 maximum deflection of 0,165 mm (0,0065 inches) and maximum stress (at outer edge) of 92724 hpa (1345 psi).

Thus, the higher pressure environment of the stage two operating mode causes the seal element 37 to naturally assume a different geometric orientation relative to the seal containment chamber defined by the recess 38 and retaining element 39 by pivoting into contact with the support surface 43. The reorientation of the seal element 37 and the additional part rigidly fixed, part freely supported seal retention introduced at point B advantageously changes the stress effects upon the seal element 37 by reducing the outer diameter dimension, from point A to point B, and by changing the Griffel case approximations from case 6 to an average of case 6 and case 13. Accordingly, the maximum stress upon the outer edge of the seal member is retained at a level below the stresses that would be introduced upon the seal element 37 had the reorientation not occurred.

The third operating mode of the seal element 37 occurs when the operating environment includes fluid pressures above 34470 hpa (500 psig). At such higher pressure operation, the fluid pressure causes the seal element 37 to deflect further until the upstream extending portion II of the seal element 37 contacts the retaining element 39 at point C. In this orientation, the seal element 37 may be considered as being rigidly held at points P1 and P2 and at point D (see Fig. 5). Accordingly, the seal element 37 will now have an effective outer edge diameter (to point D) that is considerably smaller than the outer edge diameter of the stage one operating mode (to point A) resulting in a reduced stress effect upon the seal caused by the higher pressure environment. Moreover, the rigid support at point D as well as the continued retention applied to the seal at point B provides a stress distribution upon the seal as a pure case 13 situation (Table 1 of Griffel Handbook). In the prototype seal discussed above, the seal element 37 in the third operating mode will have an outer diameter, (to point D) of 150,49 mm (5.925 inches) (as opposed to 162,25 mm (6.388 inches) for stage one (to point A) and 152,4 mm (6.0 inches) for stage two (to point B)) resulting in a case 13 maximum deflection of 0,152 mm (0.006 inch) and maximum stress of 87415 hpa (1268 psi) at 51705 hpa (750 psig) pressure operation.

Thus, in accordance with the invention embodied in the seal element 37, the three discrete pressure range modes of operation inherently and automatically orient the seal relative to the seal confinement chamber to move the seal retention point (outer diameter) inward toward the sealing surface defined by points P1 and P2. This results in the formation of a leak tight seal around the outer perimeter of the vane while confining the fluid pressure and stress effects upon the seal to within practical minimum ranges. The relatively low stress throughout the various pressure ranges of seal operation minimize seal wear and cold flow to achieve a long, effective seal work life. Significantly, the seal element 37 is operable without the need of glass filled internal membranes for dimensional stability of additional spring elements to impart a radial squeeze on the vane.

The present invention provides a quarter turn valve that is operable with a maximum full open flow rate with minimum turbulence and further affords a high degree of fluid control during low angle operation. Thus, the relatively low cost, simple construction and ease of operation inherent in butterfly valve design may now be applied and utilized in critical high performance environments. The asymmetrical vane projections take full advantage of the discovered inherent low angle fluid control adjacent the downstream rotated portion of the vane to provide a high degree of fluid flow control while permitting a streamline vane configuration to minimize the obstruction effects of the vane during full open operation. Moreover, the vane of the invention, when operated with the seal element provides long term, leak tight valve shut off.

The above-described preferred embodiment of the invention is meant to be representative only, as certain changes may be made therein by persons skilled in the art without departing from the clear teachings of the invention. Accordingly, reference should be made to the following appended claims in determining the full scope of the invention.

**Claims**

1. A high performance butterfly control valve, which comprises: (a) a valve housing (11), (b) a generally disc-shaped vane (22) mounted for selective, controlled rotation in said valve housing (11), (c) said vane (22) including a periphery (23) and being formed to include first and second diametrically opposed, asymmetrical projections (27, 28), each extending from the periphery (23) of the vane (22); (d) said vane (22) being rotatable through a quarter turn of rotation with the periphery (23) of said vane (22) whereby said vane (22) is in a sealed relation with the valve housing (11) at zero degrees of rotation and extends generally parallel to the direction (26) of fluid flow through the valve housing (11) at 90° of rotation; (e) said first projection (27) being formed about the portion of the vane periphery (23) rotated in the downstream direction; (f) said first projection (27) including a plurality of first fluid control passages (32) formed therethrough each extending from the vane periphery portion (23) of the projection (27) to the opposite face of the projection (27), whereby fluid flow adjacent the downstream rotated portion of the vane periphery (23) is solely through said first fluid control passages (32) during a first predetermined number of degrees of vane rotation and fluid flow egress is from the peripheral portion of each passage (32); (g) said second projection being formed about the portion of the vane periphery (23) rotated in the upstream direction; (h) said second projection (28) including a plurality of second fluid control passages formed therethrough, each extending from the vane periphery portion (34) of the projection (28) to the opposite face of the projection (28) whereby fluid flow adjacent the upstream rotated portion of the vane periphery (23) is solely through said second fluid control passages (34) during a second predetermined number of degrees of vane rotation; characterized by (i) said second predetermined number of degrees of vane rotation being greater than said first predetermined number of degrees of vane rotation; (j) each of said downstream rotated periphery and said first projection (27) being in close proximity to the valve housing (11) at least during a third predetermined number of degrees of vane rotation, and; (k) said first projection (27) having a length of extension that is less than the length of extension of said second projection (28) and being formed to a generally streamline, smoothly contoured configuration, thereby providing a minimal, turbulence free obstruction to fluid flow, when said vane (22) is at 30° of rotation.

2. The high performance butterfly control valve according to claim 1, further characterized by (a) the first fluid control passages (32) extending along said first projection (27) in a single row, and (b) the second fluid control passages (34) being arranged in two circumferentially spaced rows, each extending along said second projection (28).

3. The high performance butterfly control valve according to claim 1 or 2, further characterized by (a) said disc-shaped vane (22) being mounted upon a selectively rotatable shaft (15), and (b) said selectively rotatable shaft (15) being offset from said disc-shaped vane (22) in the downstream direction.

4. The high performance butterfly control valve according to claim 3, further characterized by the outermost end portion of said second projection (28) being recessed below said selectively rotatable shaft (15) when the disc-shaped vane (22) is at 90° of rotation.

5. The high performance butterfly control valve according to claim 3 or 4, further characterized by each of said second fluid control passages (34) being orientated relative to the direction (26) of fluid flow when the vane is at 90° of rotation, whereby fluid flow through the second fluid control passages (34) is directed over said selectively rotatable shaft (15).

**Patentansprüche**

1. Hochleistungsfähiges Drosselventil, das folgendes umfaßt: (a) ein Ventilgehäuse (11); (b) einen weitgehend scheibenförmig ausgebildeten Schließkörper (22), der wahlweise in dem Ventilgehäuse (11) gesteuert gedreht werden kann; (c) wobei der Schließkörper (22) eine Peripherie (23) aufweist, die erste und zweite diametral gegenüberliegende asymetrische Ansätze (27, 28) aufweist, die sich jeweils von der Peripherie (23) des Schleißkörpers (22) erstrecken; und (d) worin der Schleißkörper (22) um eine Vierteldrehung um die Peripherie (23) des Schleißkörpers (22) drehbar ist, so daß der Schleißkörper (22) bei Null Grad Drehung in dichtem Abschluß mit dem Ventilgehäuse (11) steht und sich bei einer Drehung von 90° weitgehend parallel zur Richtung (26) des das Ventilgehäuse (11) durchquerenden Flüssigkeitsstromes erstreckt; und (e) der erste Ansatz (27) um den Teil der Schleißkörperperperipherie (23) geformt ist, der flußaufwärts gedreht wird; und (f) worin der erste Ansatz (27) eine Vielzahl von ersten Flüssigkeitskanälen (32) aufweist, die sich jeweils von der Schleißkörperperipherie (23) des Ansatzes (27) zur gegenüberliegenden Seite des Ansatzes (27) erstrecken, wodurch der Flüssigkeitsstrom in der Nähe des flußabwärts gedrehten Teils der Schleißkörperperipherie (23) während einer ersten vorbestimmten Gradzahl der Drehung des Schleißkörpers nur die ersten Flüssigkeitssteuerungskanäle (32) durchquert und der Austritt von Flüssigkeit am peripheren Teil jeden Kanals (32) erfolgt; und (g) worin der zweite Ansatz um den Teil der Schleißkörperperipherie (23) geformt ist, der flußaufwärts gedreht wird; und (h) worin der zweite Ansatz (28) eine Vielzahl von zweiten Flüssigkeitssteuerungskanälen aufweist, die sich von der Schließkörperperiphie (23) des Ansatzes (28) zu der gegenüberliegenden Seite des Ansatzes (28) erstrecken, so daß der Flüssigkeitsstrom in der Nähe des flußaufwärts gedrehten Teils der Schleißkörperperipherie (23) während einer zweiten vorbestimmten Gradzahl der Drehung des Schleißkörpers nur die zweiten Flüssigkeitssteuerungskanäle (34) durchquert, dadurch gekennzeichnet, daß (i) die zweite

# EP 0 218 787 B1

vorbestimmte Gradzahl der Drehung des Schleißkörpers größer ist, als die erste vorbestimmte Gradzahl der Drehung des Schleißkörpers; und (j) daß sich die stromabwärts gedrehte Peripherie und der erste Ansatz (27) jeweils mindestens während einer dritten vorbestimmten Gradzahl der Drehung des Schleißkörpers in unmittelbarer Nachbarschaft vom Ventilgehäuse (11) befinden; und (k) daß der erste Ansatz (27) eine Länge hat, die geringer ist, als die Länge des zweiten Ansatzes (28), und eine weitgehend stromlinienförmige Konfiguration mit glattem Prifil aufweist, um so ohne Turbulenzen eine minimale Behinderung des Flüssigkeitsstromes zu gewährleisten, wenn der Schleißkörper (22) um 90° gedreht ist.

2. Hochleistungsfähiges Drosselventil nach Anspruch 1, dadurch gekennzeichnet, daß (a) sich die ersten Flüssigkeitssteuerungskanäle (32) entlang dem ersten Ansatz (27) in einer einzigen Reihe erstrecken und daß (b) die zweiten Flüssigkeitssteuerungskanäle (34) in zwei im Abstand am Umfang angeordneten Reihen angeordnet sind, die sich jeweils entlang dem zweiten Ansatz (28) erstrecken.

3. Hochleistungsfähiges Drosselventil nach Ansprüche 1 oder 2, dadurch gekennzeichnet, daß (a) der scheibenförmige Schließkörper (22) auf einer wahlweise drehbaren Welle (15) montiert ist und daß die wahlweise drehbare Welle (15) flußabwärts zu dem scheibenförmigen Schließkörper (22) versetzt angeordnet ist.

4. Hochleistungsfähiges Drosselventil nach Anspruch 3, dadurch gekennzeichnet, daß das äußerste Ende des zweiten Ansatzes (28) unter der wahlweise drehbaren Welle (15) versenkt angeordnet ist.

5. Hochleistungsfähiges Drosselventil nach einem der Ansprüche 3 oder 4, dadurch gekennzeichnet, daß jeder der zweiten Flüssigkeitssteuerungskanäle (34) in der Richtung (26) des Flüssigkeitsstromes ausgerichtet ist, wenn der Schließkörper um 90° gedreht ist, wodurch die durch die zweiten Flüssigkeitssteuerungskanäle (34) strömende Flüssigkeit über die wahlweise drehbare Welle (15) geleitet wird.

## Revendications

1. Vanne papillon de réglage haute performance comprenant: (a) un corps de vanne (11); (b) un dispositif de commande (22) ayant généralement la forme d'un disque monté pour une rotation sélective et contrôlée dans ledit corps de vanne (11); et (c) ledit dispositif de commande (22) incluant une périphérie (23) et des première et seconde projections (27, 28) dissimétriques diamétralement opposées dont chacune s'étend de la périphérie (23) du dispositif de commande (22); (d) ledit dispositif de commande pouvant pivoter sur un quart de son axe avec la périphérie (23) dudit dispositif de commande (22) créant ainsi un contact étanche entre ledit dispositif de commande (22) et le corps de vanne (11) en cas d'une rotation de zéro degré, ledit dispositif de commande s'étendant de façon généralement parallèle à la direction (26) de l'écoulement du fluide à travers le corps de vanne (11) en cas d'une rotation de 90°; (e) ladite première projection (27) étant formée autour de la partie périphérique du dispositif de commande tourné en direction aval; (f) ladite première projection (27) incluant une multitude de premiers et deuxièmes passages de contrôle de fluide (32) dont chacun s'étend de la partie périphérique du dispositif de commande (23) de la projection (27) vers la surface opposée de la projection (27) dirigeant ainsi l'écoulement de fluide au voisinage de la partie périphérique du disposit de commande (23) tournée en direction aval uniquement à travers lesdits premiers passages de contrôle de fluide (32) pendant un premier nombre prédéterminé de degrés de rotation du dispositif de commande assurant ainsi l'écoulement du fluide à partir de la partie périphérique de chacun des passages (32); (g) ladite deuxième projection étant formée autour de la partie périphérique du dispositif de commande (23) tournée en direction amont; (h) ladite deuxième projection (28) comprenant une multitude de deuxièmes passages de contrôle dont chacun s'étend de la partie périphéique du dispositif de commande (34) de la projection (28) vers la surface opposée de la projection (28) dirigeant ainsi l'écoulement du fluide au voisinage de la partie périphérique du dispositif de commande (23) tournée en direction amont uniquement à travers lesdits deuxièmes passages de fluide (34) pendant un deuxième nombre prédéterminé de degrés de rotation du dispositif de commande; caractérisé en ce que (i) ledit deuxième nombre prédéterminé de degrés de rotation du dispositif de commande est plus grand que le premier nombre prédéterminé de rotation du dispositif de commande; que (j) les parties périphériques respectives tournées en direction aval et la première projection (27) se trouvent à proximité immédiate du corps de vanne (11) au moins pendant un troisième nombre prédéterminé de degrés de rotation du dispositif de commande; et que (k) la première projection (27) a une longueur inférieure à la longueuer de ladite deuxième projection (28) et présente une configuration généralement aérodynamique et lisse assurant ainsi une obstruction minimale et exempte de turbulences de l'écoulement du fluide lorsque ledit dispositif de commande est tourné à 90°.

2. Vanne papillon de réglage haute performance suivant la revendication 1, caractérisé en ce que (a) les premiers passages de contrôle de fluide (32) sont disposés en une seule rangée lelong de ladite première projection (27) et que les deuxièmes passages de contrôle de fluide (34) sont disposés en deux rangées circonférentiellement espacées s'étendant chacune lelong de ladite deuxième projection (28).

3. Vanne papillon de réglage haute performance suivant l'une des revendications 1 ou 2, caractérisé en ce que (a) le dispositif de commande (22) en forme de disque est monté sur un axe rotatif (15) et que (b) ledit axe rotatif (15) est décalé en direction aval par rapport au dispositif de commande (22) en forme de disque.

4. Vanne papillon de réglage haute performance suivant la revendication 3, caractérisé en ce que l'extrémité de ladite deuxième projection (28) est disposée en retrait en-dessous dudit axe rotatif (15) lorsque le dispositif de commande (22) en forme de disque se trouve dans une position de rotation de 90°.

5. Vanne papillon de réglage haute performance suivant l'une des revendications 1 ou 2, caractérisé en ce que chacun desdits deuxièmes passages de contrôle de fluide (34) est orienté dans la direction (26) de l'écoulement de fluide lorsque le dispositif de commande est tourné à 90° dirigeant ainsi l'écoulement de fluide traversant les deuxièmes passages de contrôle de fluide (34) sur ledit axe rotatif (15).

Fig. 2

Fig. 1

1

*Fig. 4.*

*Fig. 3.*

*Fig. 6.*

Fig. 5